# EUROPEAN PATENT APPLICATION

(11) **EP 2 530 252 A2**
(43) Date of publication of application: **05.12.2012**
(21) Application number: 12170184.1
(22) Date of filing: 31.05.2012
(51) Int. Cl.: F01D 11/00, F01D 11/08

(54) **Flexible seal**

(30) Priority: 03.06.2011 US 201113152619
(71) Applicant: General Electric Company, Schenectady, NY 12345 (US)
(72) Inventor: Giri, Sheo Narain, 560066 Bangalore, Karnataka (IN)
(74) Representative: Cleary, Fidelma

(57) **Abstract**

A formed flexible seal (10) is provided and includes a first section (20), a second section (40) and a formed flexible section (60) connected at opposite end portions (61, 62) thereof to the first and second sections (20, 40) and having a central portion (60) extending between the opposite end portions (61, 62) to absorb differential thermal growth of vessels to which the first and second sections (20, 40) are coupled.

## Description

### BACKGROUND OF THE INVENTION

The subject matter disclosed herein relates to a formed flexible seal.

In gas turbine engines, combustion occurs in a combustor and the high temperature and high energy fluids produced by that combustion are directed to flow from the combustor into a transition piece and toward a turbine section. The transition piece and the turbine section are normally coupled to one another at the aft frame of the transition piece and the stage 1 nozzle. This coupling can be achieved by advanced cloth seals.

During turbine operations and transient cycles in particular, the transition piece and the stage 1 nozzle may experience differential axial and radial deformation that affects several components including the seals between the transition piece and the stage 1 nozzle. In fact, field experience has revealed that the stage 1 nozzle tends to creep and due to nozzle creep deflection, seal effectiveness decreases. This decreased seal effectiveness in turn results in cooling air leakage to the primary flow path causing performance loss.

### BRIEF DESCRIPTION OF THE INVENTION

According to one aspect of the invention, a formed flexible seal is provided and includes a first section coupled to a first vessel, a second section coupled to a second vessel and a formed flexible section connected at opposite end portions thereof to the first and second sections and having a central portion extending between the opposite end portions to absorb differential thermal growth of the first and second vessels to which the first and second sections are coupled. The central portion may comprise a formed flexible portion to absorb at least one of radial, circumferential and axial differential thermal growth of the first and second vessels.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a side view of a formed flexible seal in accordance with embodiments;
FIG. 2 is a side view of a formed flexible seal in accordance with alternative embodiments;
FIG. 3 is a side view of a formed flexible seal in accordance with alternative embodiments;
FIG. 4 is an enlarged view of the formed flexible seal of FIGS. 1, 2 and 3;
FIG. 5 is an enlarged view of a formed flexible seal in accordance with alternative embodiments; and
FIG. 6 is an enlarged view of a formed flexible seal in accordance with alternative embodiments.

The detailed description explains embodiments of the invention, together with advantages and features, by way of example with reference to the drawings.

### DETAILED DESCRIPTION OF THE INVENTION

In accordance with aspects, a formed flexible seal provides cost effective and rugged design to improve sealing effectiveness in at least the transient environment. The formed flexible seal shows prompt thermal response and, due to temperature changes, the formed flexible seal flexes to provide ample room for deformation with fixed or substantially fixed transition piece and stage 1 nozzle end constraints. As will be discussed below, the formed flexible seal can be assembled with the transition piece and stage 1 nozzle using screw/bolt fasteners to ensure metal to metal contact or other similar arrangements.

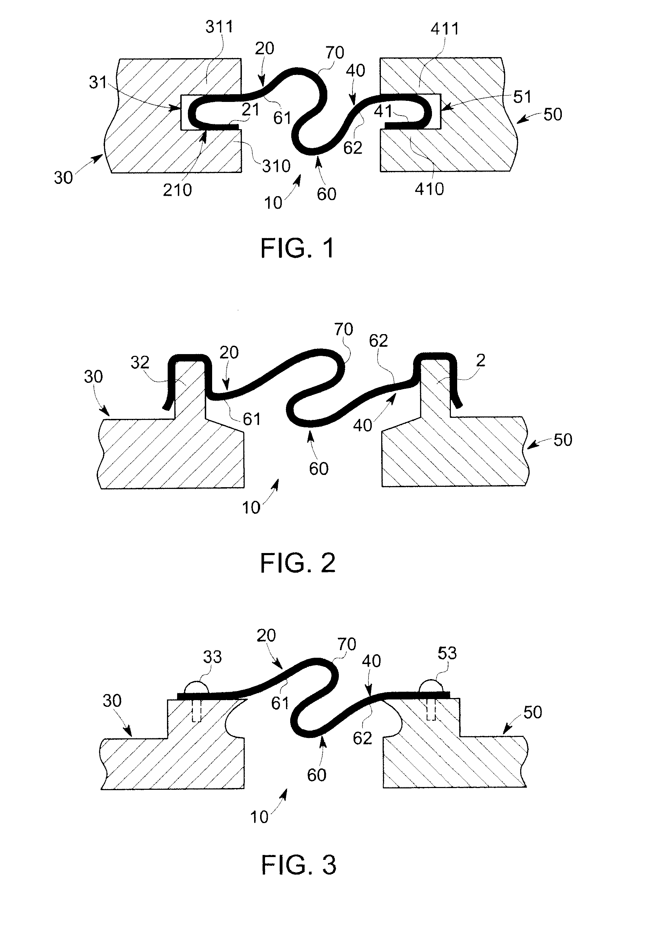

With reference to FIGS. 1-3, a formed flexible seal 10 is provided. The seal 10 includes a first section 20, which is coupled to a first vessel 30 of, for example, a gas turbine engine, a second section 40, which is coupled to a second vessel 50 of the exemplary gas turbine engine, which is disposed downstream from the first vessel 30, and a formed flexible section 60. In accordance with embodiments, the first vessel 30 may include a transition piece of the exemplary gas turbine engine and the second vessel 50 may include a stage 1 nozzle. In these cases, the first section 20 is coupled to an aft frame of the transition piece and the second section 40 is coupled to a side wall of the stage 1 nozzle. However, it is to be understood that the seal 10 can be applied to any components of the gas turbine engine or another similar apparatus.

The formed flexible section 60 has opposite end portions 61 and 62 and is connected at the opposite end portions 61 and 62 to the first and second sections 20 and 40, respectively. The formed flexible section 60 further includes a central, formed flexible portion 70 extending between the opposite end portions 61 and 62. The formed flexible portion 70 flexes to responsively absorb torsion forces applied to the first and second sections 20 and 40 by the first and second vessels 30 and 50 in accordance with at least one or more of radial, circumferential and axial differential thermal growth of the first and second vessels 30 and 50.

That is, as temperatures within the gas turbine engine increase and the first and second vessels 30 and 50 experience for example thermal expansion, one or both of the first and second vessels 30 and 50 may translate relative to the other. This relative translation causes one or both of the first and second vessels 30 and 50 to pull on the first and second sections 20 and 40. This pulling is absorbed by the formed flexible section 60 whereby the formed flexible portion 70 flexes and flattens. As such, an effective overall length of the seal 10 is increased such that the relative translation can be absorbed.

As shown in FIG. 1, the first section 20 may be coupled to the first vessel 30 by an end 21 thereof being bent into a preloaded U-shape 210 and inserted into a preloaded groove 31 of the first vessel 30. This preloaded groove 31 may include a shoulder portion 310 and a flap 311, which radially opposes the shoulder portion 310, and can be formed by machining or another similar process. In a similar manner, the second section 40 may be coupled to the second vessel 50 by an end 41 thereof being bent into a preloaded U-shape 410 and inserted into a preloaded groove 51 of the second vessel 50. This preloaded groove 51 may include a shoulder portion 510 and a flap 511, which radially opposes the shoulder portion 510, and can be formed by machining or another similar process. In particular, the configuration of FIG. 1 can serve to prevent seal crushing in event of transition piece aft frame and stage 1 nozzle penetration during transient cycles.

As shown in FIG. 2, the first section 20 may be coupled to the first vessel 30 by being preloaded and circumferentially mated with a flange 32 of the first vessel 30. In a similar manner, the second section 40 may be coupled to the second vessel 50 by being preloaded and circumferentially mated with a flange 52 of the second vessel 50.

As shown in FIG. 3, the first section 20 may be coupled to the first vessel 30 by being at least one of welded and screwed or otherwise attached to the first vessel 30 at a weld point 33 or attachment point. In a similar manner, the second section 40 may be coupled to the second vessel 50 by being at least one of welded and screwed or otherwise attached to the second vessel 50 at a weld point 53 or attachment point.

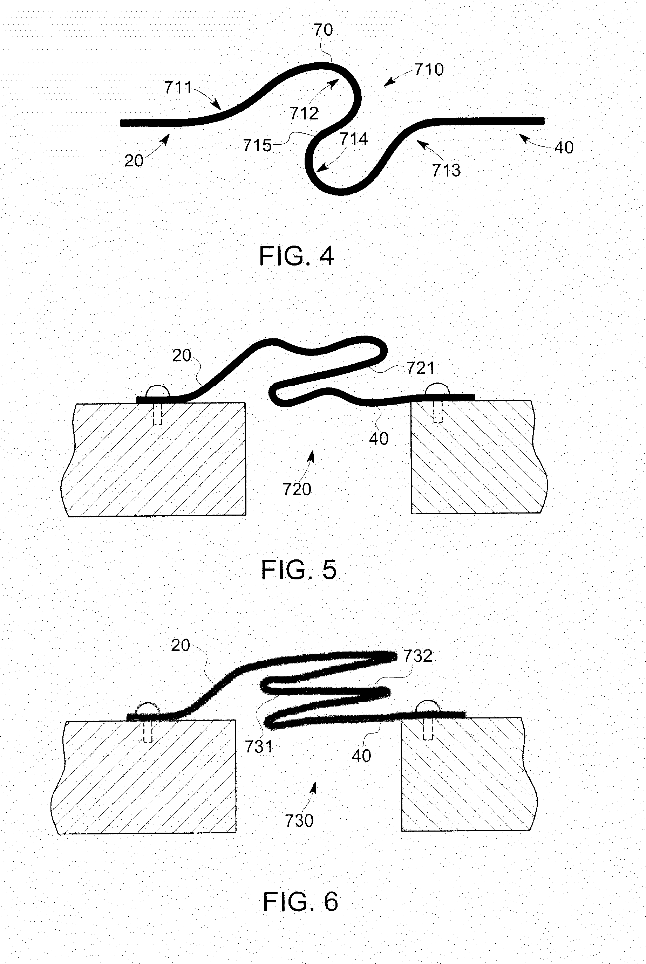

With reference to FIG. 4, the first and second sections 20 and 40 have substantially similar lengths and, at least at an initial time prior to any at least one of radial, axial and circumferential differential thermal growth of the first and second vessels 30 and 50, the first and second sections 20 and 40 are oriented substantially in parallel with one another. In some cases, the first and second sections 20 and 40 may be coplanar and/or coaxial. By contrast, the formed flexible portion 70 protrudes radially inwardly and outwardly from respective planes of the first and second sections 20 and 40. In accordance with alternative embodiments, the formed flexible portion 70 may also protrude radially inwardly from the respective planes of the first and second sections 20 and 40. In accordance with still further alternative embodiments, the formed flexible portion 70 may also protrude radially outwardly from the respective planes of the first and second sections 20 and 40. In any case, the formed flexible portion 70 has a height as measured from respective planes of the first and second sections 20 and 40 that is substantially larger than a thickness of the first section 20, the second section 40 or the formed flexible section 60.

As shown in FIG. 4, the formed flexible portion 70 may be provided in a double c-shape 710. In this case, the first section 20 curves radially inwardly along a curved section 711 towards an oppositely curved hairpin section 712. By contrast, the second section 40 curves radially outwardly along a curved section 713 towards an oppositely curved hairpin section 714. The hairpin sections 712 and 714 are connected by a central section 715. The formed flexible portion 70 may be symmetric about the central section 715 and reversely configured as described herein.

As shown in FIG. 5, the formed flexible portion 70 may be provided in a corrugated z-shape 720. In this case, the first section 20 extends radially inwardly and the second section 40 remains radially constrained. Both the first section 20 and the second section 40 are connected to a central z-shaped section 721 and the first section 20, the second section 40 and the central z-shaped section 721 are corrugated such that each is drawn or bent into folds, alternating furrows and ridges, or wrinkles. The corrugations may be smooth or angular. The formed flexible portion 70 may be reversely configured as described herein.

As shown in FIG. 6, the formed flexible portion 70 may be provided as a bellow portion 730. The bellow portion 730 has a shape that is similar to that of the corrugated z-shape except that the bellow portion has a central bellow section 731 that has multiple folds 732 and may or may not include corrugations.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A formed flexible seal (10), comprising:
a first section (20) coupled to a first vessel (30);
a second section (40) coupled to a second vessel (50); and
a formed flexible section (60) connected at opposite end portions (61, 62) thereof to the first and second sections (20, 40) and having a central portion (70) extending between the opposite end portions (61, 62) to absorb differential thermal growth of first and second vessels (30,50) to which the first and second sections (20, 40) are coupled.

2. The formed flexible seal (10) according to claim 1, wherein the first and second vessels (30,50) each comprise a component of a gas turbine engine.

3. The formed flexible seal (10) according to claim 1 or 2, wherein the central portion (70) comprises a double c-shaped portion (710).

4. The formed flexible seal (10) according to claim 1 or 2, wherein the central portion (70) comprises a corrugated z-shaped portion (720).

5. The formed flexible seal (10) according to claim 1 or 2, wherein the central portion (70) comprises a bellow portion (730).

6. The formed flexible seal (10) of any of claims 1 to 5, wherein the central portion comprises a formed flexible portion (60) adapted to absorb at least one of radial, circumferential and axial differential thermal growth of the first and second vessels (30, 50).

7. The formed flexible seal (10) according to any preceding claim, wherein the first section (20) is preloaded and coupled to a preloaded groove (31) of the first vessel (30).

8. The formed flexible seal (10) according to any of claims 1 to 6, wherein the first section (20) is preloaded and coupled to a flange (32) of the first vessel (30).

9. The formed flexible seal (10) according to any of claims 1 to 6, wherein the first section (20) is at least one of welded and screwed to the first vessel (30).

10. The formed flexible seal (10) according to any of claims 1 to 6, wherein the second section (40) is preloaded and coupled to a preloaded groove (51) of the second vessel (50).

11. The formed flexible seal (10) according to any of claims 1 to 6, wherein the second section (40) is preloaded and coupled to a flange (52) of the second vessel (50).

12. The formed flexible seal (10) according to any of claims 1 to 6, wherein the second section (40) is at least one of welded and screwed to the second vessel (50).

13. The formed flexible seal (10) according to any preceding claim, wherein a height of the formed flexible portion (60) is substantially larger than a thickness of the first (20) and second (40) sections.
